# EUROPEAN PATENT APPLICATION

(11) **EP 1 143 107 A2**
(43) Date of publication of application: **10.10.2001**
(21) Application number: 00310797.6
(22) Date of filing: 05.12.2000
(51) Int. Cl.: F01D 9/02, F23R 3/00, F01D 25/12

(54) **Gas turbine transition duct end frame cooling**

(30) Priority: 06.04.2000 US 544102
(71) Applicant: GENERAL ELECTRIC COMPANY, Schenectady, NY 12345 (US)
(72) Inventor: Cromer, Robert Harold, Johnstown, New york 12095 (US); Bechtel, William Theodore, II, Scotia, New York 12302 (US); Sutcu, Maz, Niskayuna, New York 12309 (US)
(74) Representative: Goode, Ian Roy

(57) **Abstract**

A transition duct assembly (26, 28) for a gas turbine includes a transition duct (28) having opposite ends, one of the ends adapted to communicate with an inlet (14) to a first turbine stage; an impingement cooling sleeve surrounding the transition duct (28) with an annulus (44) therebetween, the impingement cooling sleeve (30) having a plurality of cooling apertures (46) formed therein; a transition duct end frame (26) connected to the one end of the transition duct, a forward edge of the impingement cooling sleeve (30) received in the end frame (26); the end frame (26) having a first plurality of cooling holes (36) axially beyond the forward edge of the impingement cooling sleeve (30), each cooling hole (36) communicating at the one end with space external of the impingement cooling sleeve; and a second plurality of cooling holes (42) in the end frame, each communicating at one end with the annulus (44), and at an opposite end with the first plurality of cooling holes (36). A method of cooling a transition duct end frame in a gas turbine includes the steps of a) directing cooling air into the end frame (26) from a region external of the transition duct (28) and the impingement cooling sleeve (30); and b) redirecting the cooling air from the end frame (26) into the annulus (44) between the transition duct (28) and the impingement cooling sleeve (30).

## Description

This invention relates to cooling of turbo machinery combustor components and specifically, to the cooling of transition ducts that connect a plurality of combustors to the first stage of a gas turbine.

In a typical arrangement, an annular array of combustors are connected to the first stage of the turbine by the transition ducts that are each shaped at one end to conform to a respective cylindrical combustor liners, and at the opposite end to conform to the turbine stage inlet. At the latter end, the transition duct has an external end frame by which the transition duct is secured to the turbine. In dry, low NOx combustion systems in the assignee's gas turbine product line, a perforated impingement cooling sleeve surrounds the transition duct, and is used to direct compressor discharge cooling air into contact with the transition duct. This cooling air eventually mixes with the fuel in the combustor.

Some of the cooling air is removed from the annulus between the transition duct and the surrounding impingement sleeve through holes in the transition duct end frame. This air, which is used to cool the end frame, dumps into the hot gas from the combustor exit just before entering the gas turbine first stage nozzle. The problem with this current method is that this cooling air bypasses the combustor, thereby effectively increasing the flame temperature and NOx emissions. On new, advanced design combustion systems, the flame temperature increase due to this combustion air loss may be as large as 8 to 10 degrees F, or equivalent to 1 to 2 ppm NOx emissions. As a result, this "by-pass air" becomes an important factor in trying to achieve gas turbine operation with single digit NOx performance.

In accordance with this invention, transition duct end frame cooling air is reused, i.e., recirculated to the combustor, thereby lowering combustion flame temperature by about 8-10°F. More specifically, a first array of holes is drilled into the outer perimeter of the end frame and a lip or recess is milled into the face of the end frame and then sealed. The recess also communicates with a second array of holes drilled substantially axially within the end frame, and previously utilized to remove air from the annulus between the impingement sleeve and the transition duct. Now, compressor discharge air can be directed through the first array of holes to impinge on the lip milled into the face of the end frame, cooling both the lip of the end frame as well as a U-shaped strip seal component attached to the forward edge of the end frame, and then redirected through the second array of substantially axially oriented holes into the annulus between the transition duct and the impingement cooling sleeve. This air then mixes with air passing through cooling holes in the impingement sleeve, and is eventually directed to the combustion flame zone in the combustor. The substantially axially extending holes through the end frame may be turbulated to improve cooling effectiveness. The effect of reusing (instead of losing) the end frame cooling air is that the flame temperature can be reduced, thus also reducing NOx emissions.

In its broader aspects, the present invention includes a transition duct assembly for a gas turbine comprising a transition duct having opposite ends, one of the ends adapted to communicate with an inlet to a first turbine stage; an impingement cooling sleeve surrounding the transition duct with an annulus therebetween, the impingement cooling sleeve having a plurality of cooling apertures formed therein; a transition duct end frame connected to the one end of the transition duct, a forward edge of the impingement cooling sleeve received in the end frame; the end frame having a first plurality of cooling holes axially beyond the forward edge of the impingement cooling sleeve, each cooling hole communicating at the one end with space external of the impingement cooling sleeve; and a second plurality of cooling holes in the end frame, each communicating at one end with the annulus, and at an opposite end with the first plurality of cooling holes.

In another aspect, the invention relates to an end frame combustor for a gas turbine transition duct comprising a closed peripheral member adapted for attachment to a forward end of a transition duct, the peripheral member having a forward edge, a rearward edge, a top surface and a bottom surface; closed chamber about the forward edge; a first plurality of cooling bores extending from the top surface to the chamber; and a second plurality of cooling bores extending from the rearward edge to the chamber.

In still another aspect, the invention relates to a method of cooling a transition duct end frame in a gas turbine wherein an impingement cooling sleeve having a plurality of cooling apertures therein surrounds the transition duct creating an annulus therebetween, and wherein a transition duct end frame is secured to a forward edge of the transition duct, with a forward flange of the impingement sleeve also received in the end frame, the method comprising a) directing cooling air into the end frame from a region external of the transition duct and the impingement cooling sleeve; and b) redirecting the cooling air from the end frame into the annulus between the transition duct and the impingement cooling sleeve.

An embodiment of the invention will now be described, by way of example, with reference to the accompanying drawings, in which:
FIGURE 1 is a simplified cross section of a conventional transition duct located between a combustor and a first turbine stage and with the transition duct end frame omitted;
FIGURE 2 is a partial cross section of the forward end of a transition duct and associated end frame in accordance with this invention; and
FIGURE 3 is a partial front elevation of the transition duct end frame shown in Figure 2.

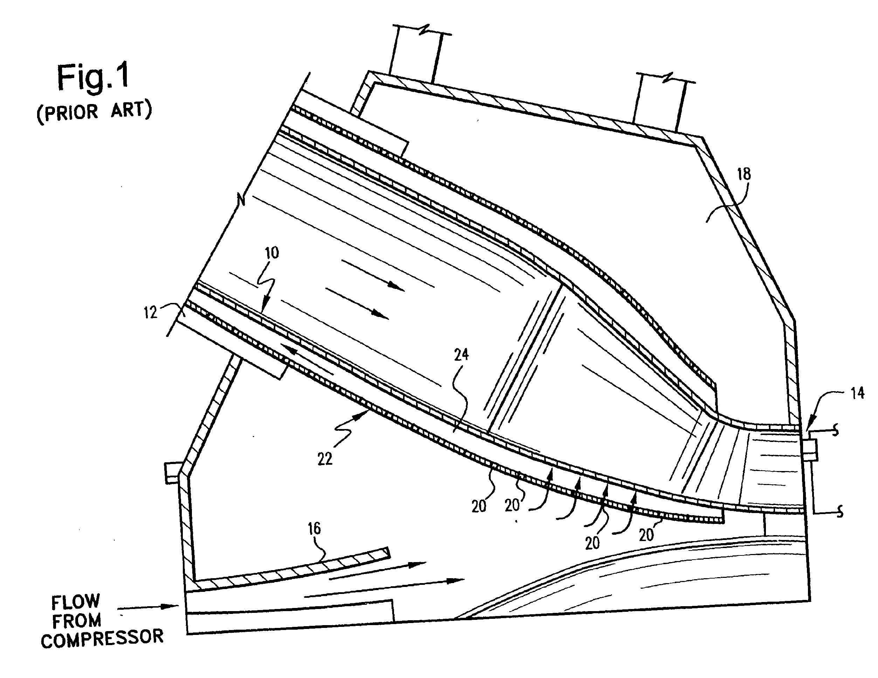

With reference to Figure 1, a typical gas turbine includes a transition duct 10 by which hot combustion gases from an upstream combustor, as represented by the combustion liner 12, are passed to the first stage inlet 14 of a turbine. The flow from the gas turbine compressor exits an axial diffuser 16 and enters into a compressor discharge case 18. About 50% of the compressor discharge air passes through apertures 20 formed along and about a transition duct impingement cooling sleeve 22 for flow in an annular region or annulus 24 between the transition duct 10 and the radially outer transition duct impingement sleeve 22. The remaining approximately 50% of the compressor discharge flow passes into flow sleeve holes of an upstream combustion liner cooling sleeve (not shown) and into an annulus between the cooling sleeve and the liner and eventually mixes with the air from the transition duct annulus 24. This combined air eventually mixes with the gas turbine fuel in the combustion chamber. The transition duct typically has an end frame welded to the end that connects to the inlet of the first stage of the turbine.

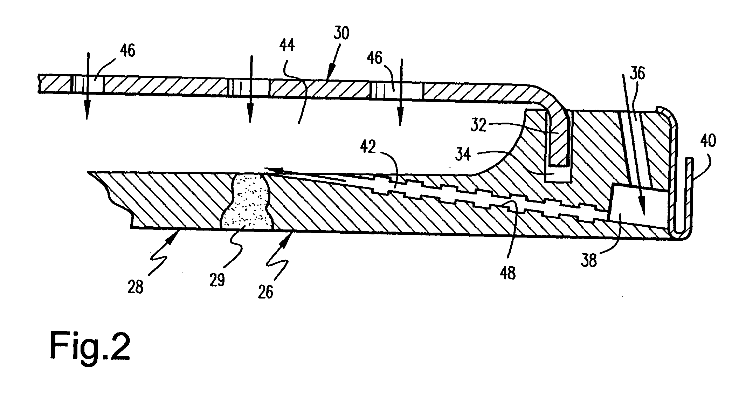

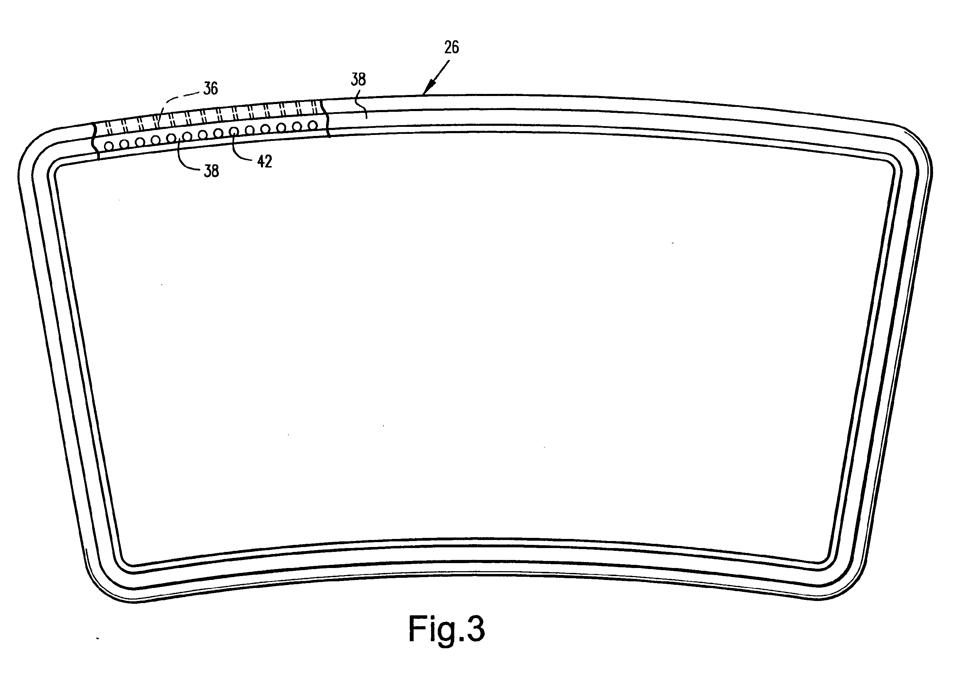

Figures 2 and 3 illustrate a transition duct end frame assembly in accordance with this invention including a closed periphery end frame 26 that is secured to the forward edge of a transition duct 28 via weld 29. It can be seen that a forward end of an impingement cooling sleeve 30 is formed with a radially inwardly directed flange 32 which seats within the peripheral slot 34 formed in the end frame.

A first plurality of cooling holes 36 are drilled into the outer perimeter of the end frame, forward of the slot 34. These holes communicate with a lip or recess 38 milled into the face of the end frame continuously about the periphery thereof, the latter closed by a discrete U-strip or seal component 40 welded over the end of the frame. A second plurality of substantially axially extending cooling holes 42 are drilled in the end frame, connecting the recess 38 with the annulus 44 between the impingement sleeve 30 and the transition duct 28. In current transition duct end frames, these are the only cooling holes in the end frame, with cooling air passing from left to right, exiting into the hot combustion gas path. Now, the cooling air flow direction is reversed so that cooling air flows from a region external of the transition duct (i.e., from the compressor discharge case 18) into the cooling holes 36 and recess 38 and then flows from this recess into the annulus 44 via cooling holes 42. The air exiting cooling holes 42 then mixes with air passing through the cooling holes or apertures 46 in the impingement sleeve 30 and this air is directed to the combustion flame zone.

The cooling holes 42 may be turbulated by forming surface discontinuities (such as ribs 48 or grooves or the like) to increase cooling effectiveness.

Transition duct floating and side seals (not shown) are guided by the "U" strip 40 welded over the slot or recess 34 milled into the end of the end frame.

It will be appreciated that the arrangements of cooling holes 36 and 42 are not drawn to scale, particularly in Figure 2. In practice, the cooling holes 42 are about 6 mils in diameter and spaced apart by about 120 mils, about the entire end frame. The cooling holes 36 may be of similar diameter and spacing although the exact size and number of both arrays of holes 36 and 42 will depend on cooling requirements.

By reversing the end frame cooling air, the flame temperature in the combustor can be reduced by 8 to 10°F, thus improving combustion efficiency and reducing NOx emissions.

## Claims

1. A transition duct assembly (26, 28) for a gas turbine comprising:
a transition duct (28) having opposite ends, one of said ends adapted to communicate with an inlet (14) to a first turbine stage;
an impingement cooling sleeve (30) surrounding said transition duct (28) with an annulus (44) therebetween, said impingement cooling sleeve (30) having a plurality of cooling holes (46) formed therein;
a transition duct end frame (26) connected to said one end of the transition duct, a forward edge of said impingement cooling sleeve (30) received in said end frame (26);
said end frame (26) having a first plurality of cooling holes (36) axially beyond the forward edge of said impingement cooling sleeve (30), each cooling hole (36) communicating at one end with space external of said impingement cooling sleeve; and a second plurality of cooling holes (42) in said end frame, each communicating at one end with said annulus (44), and at an opposite end with said first plurality of cooling holes (36).

2. The assembly of claim 1 wherein said end frame (26) is formed with a continuous closed recess (38) about a forward edge thereof, and further wherein said first and second pluralities of cooling holes (36, 42) communicate with each other through said closed recess (38).

3. The assembly of claim 2 wherein said closed recess (38) comprises a groove machined into said end frame (26) and closed by a discrete seal component (40).

4. The assembly of claim 1 wherein said second plurality of holes (42) are turbulated.

5. An end frame for a gas turbine transition duct comprising a closed periphery end frame (26) adapted for attachment to a forward end of a transition duct (28), said end frame (26) having a forward edge, a rearward edge, a top surface and a bottom surface; a closed recess (38) about said forward edge; a first plurality of cooling holes (36) extending from said top surface to said recess (38); and a second plurality of cooling holes (42) extending from said rearward edge to said recess (38).

6. The end frame of claim 5 including a peripheral slot (34) axially behind said first plurality of cooling holes (36) adapted to receive a flange (32) of an impingement cooling sleeve (30).

7. A method of cooling a transition duct end frame in a gas turbine wherein an impingement cooling sleeve (30) having a plurality of cooling apertures (46) therein surrounds the transition duct (28) creating an annulus (54) therebetween, and wherein a transition duct end frame (26) is secured to a forward edge of the transition duct (28), with a forward flange (32) of said impingement sleeve (30) also received in the end frame, the method comprising:
a) directing cooling air into the end frame (26) from a region external of said transition duct (28) and said impingement cooling sleeve (30); and
b) redirecting said cooling air from said end frame into the annulus (44) between the transition duct (28) and the impingement cooling sleeve (30).

8. The method of claim 7 and including the step of routing said cooling air from said annulus (44) into said combustor (12).

9. The method of claim 7 wherein step a) is carried out by providing a first plurality of cooling holes (36) in said end frame (26), first ends of said cooling holes communicating with said region.

10. The method of claim 7 wherein step a) is further carried out by forming a continuous closed recess (38) about the periphery of the end frame, with second ends of said cooling holes (36) opening into said closed recess (38).

11. The method of claim 7 wherein step b) is carried out by providing a second plurality of cooling holes (42) in said end frame (26) extending between said closed recess (38) and said annulus (44).

12. The method of claim 11 and wherein step b) is further carried out by turbulating said second plurality of cooling holes (42).
